# EUROPEAN PATENT APPLICATION

(11) **EP 4 585 895 A1**
(43) Date of publication of application: **16.07.2025**
(21) Application number: 23878934.1
(22) Date of filing: 26.09.2023
(51) Int. Cl.: G01M 17/007

(54) **CALIBRATION SUPPORT AND CALIBRATION DEVICE**

(30) Priority: 17.10.2022 CN 202222734450 U
(71) Applicant: Autel Intelligent Technology Corp. Ltd., Shenzhen, Guangdong 518055 (CN)
(72) Inventor: ZHENG, Zihao, Shenzhen, Guangdong 518055 (CN)
(74) Representative: Harris, Oliver John Richard
(86) International application number: PCT/CN2023/121682
(87) International publication number: WO 2024/082941

(57) **Abstract**

A calibration support (1000), comprising a base (1), a column assembly (2) and a beam assembly (3), wherein the base (1) is provided with a maintenance hole (11); the column assembly (2) comprises a fixed column (21), a lifting column (22), a driving assembly (23) and a quick-release member (24); a first end of the fixed column (21) is arranged on the base (1), the fixed column (21) is provided with an accommodation cavity (211), the accommodation cavity (211) extends from the first end of the fixed column (21) to a second end of the fixed column (21), and one side of the fixed column (21) is provided with an opening; the lifting column (22) is inserted into the accommodation cavity (211) from the second end of the fixed column (21), the quick-release member (24) is detachably connected to the fixed column (21), and the quick-release member (24) corresponds to the opening; the driving assembly (23) is arranged in the accommodation cavity (211), and the driving assembly (23) corresponds to the maintenance hole (11); and the quick-release member (24) limits the driving assembly (23) to block the movement of the driving assembly (23) toward the maintenance hole (11), and the driving assembly (23) is detachably connected to the lifting column (22). The present application solves the problem that the operation process is relatively difficult and tedious when a driving assembly is disassembled and assembled in an existing calibration support. A calibration device is further provided.

## Description

### CROSS-REFERENCE TO RELATED APPLICATIONS

This application claims priority to Chinese Patent Application No. 202222734450.6, entitled "CALIBRATION SUPPORT AND CALIBRATION DEVICE", filed on October 17, 2022, by China Patent Office, which is incorporated herein by reference in its entirety.

### TECHNICAL FIELD

The present application relates to the technical field of automobile calibration, and in particular to a calibration support and a calibration device.

### BACKGROUND

As an indispensable vehicle in people's daily life, the vehicle has been used in many fields, and there are increasing requirements of people for its security performance. Typically, after a vehicle has been in operation for a period of time, the vehicle is required for maintenance, e.g., the vehicle is performed four-wheel alignment using a calibration device. However, the height of different vehicles is very different, e.g., the height of a truck is generally 2.5 meters, and the height of a car is 1.6 meters. In order to enable the calibration device to calibrate different vehicles, there is a calibration device with a telescopic calibration support in the market, i.e., the calibration support includes a base, a column assembly and a beam assembly; the column assembly includes a fixed column, a lifting column and a driving assembly; the fixed column is provided with an accommodation cavity, the accommodation cavity extends from a first end of the fixed column to a second end of the fixed column; the first end of the fixed column is provided with a first opening in communication with the accommodation cavity; the second end of the fixed column is provided with a second opening in communication with the accommodation cavity; the first end of the fixed column is fixed to the base, the base closes the first opening; the lifting column is inserted into the accommodation cavity, and the second end of the lifting column protrudes from the second opening; the driving assembly is provided in the accommodation cavity; the driving assembly is used to drive the lifting column to contract to the fixed column, or the lifting column extends from the fixed column, and the beam assembly is provided to the lifting column.

In implementing the present application, the inventors of the present application found that: when disassembling the driving assembly separately for maintenance, the current calibration support needs to disassemble the base and the fixed column before removing the driving assembly from the accommodation cavity, which is difficult and tedious.

### SUMMARY

In view of the foregoing, embodiments of the present application provide a calibration support and a calibration device that overcome or at least partially solve the foregoing problems.

In order to solve the above-mentioned technical problem, one technical solution adopted by the present application is: providing a calibration support including a base, a column assembly and a beam assembly, where the base is provided with a maintenance hole penetrating the base; the column assembly includes a fixed column, a lifting column, a driving assembly and a quick-release member; a first end of the fixed column is arranged on the base, the fixed column is provided with an accommodation cavity, the accommodation cavity extends from the first end of the fixed column to a second end of the fixed column, and one side of the fixed column is provided with an opening, and the opening is communicated with the accommodation cavity; the first end of the lifting column is inserted into the accommodation cavity from the second end of the fixed column, the quick-release member is detachably connected to the fixed column, and the quick-release member corresponds to the opening; the driving assembly is arranged in the accommodation cavity, and the driving assembly corresponds to the maintenance hole; and the quick-release member limits the driving assembly to block the movement of the driving assembly toward the maintenance hole, and the driving assembly is detachably connected to the lifting column; and a beam assembly provided on the lifting column.

Alternatively, the driving assembly includes a driving unit and a limiting member, the limiting member is connected to the driving unit, and the driving unit is detachably connected to the lifting column; the quick-release member includes a mounting plate, a first side plate and a second side plate, where the first side plate and the second side plate are fixed to the mounting plate in a relatively spaced manner, the first side plate and the second side plate are inserted into the accommodation cavity from the opening, a surface of the first side plate facing the second side plate is provided with a first limiting step, a surface of the second side plate facing the first side plate is provided with a second limiting step, the driving unit partially passes between the first side plate and the second side plate, and the first limiting step and the second limiting step abut against the limiting member so as to block the driving unit from moving towards the maintenance hole, and the mounting plate is detachably fixed to the fixed column.

Alternatively, an end of the driving unit near the maintenance hole is hinged to the limiting member, and an end of the driving unit away from the maintenance hole is hinged to the lifting column; and the limiting member is detachably fixed to the quick-release member, and/or the limiting member is detachably fixed to the fixed column.

Alternatively, the limiting member includes a first limiting plate, a connection plate and a second limiting plate, where the first limiting plate and the second limiting plate are fixed to the connection plate at an interval oppositely, the first limiting plate is provided with a first mounting hole, the second limiting plate is provided with a second mounting hole, and two opposite side surfaces of the driving unit are respectively provided with a first mounting shaft and a second mounting shaft; the driving unit portion passes between the first limiting plate and the second limiting plate, the first mounting shaft penetrates the first mounting hole, the second mounting shaft penetrates the second mounting hole, one end of the first limiting plate facing the maintenance hole abuts against the first limiting step, and one end of the second limiting plate facing the maintenance hole abuts against the second limiting step.

Alternatively, the driving unit includes a mounting support, a coupling, a driving member and a lifting body, where the mounting support is provided with a mounting cavity, a first end of the mounting support faces the maintenance hole, the first end of the mounting support is provided with a first through hole communicating with the mounting cavity, a second end of the mounting support faces away from the maintenance hole, the second end of the mounting support is provided with a second through hole communicating with the mounting cavity, the lifting body is mounted on the first end of the mounting support, the coupling is located in the mounting cavity, and the driving member is mounted on the second end of the mounting support; one end of the coupling is connected to the lifting body via the first through hole, and the other end of the coupling is connected to the driving member via the second through hole; the mounting support is connected to the limiting member.

Alternatively, the coupling includes a first half-coupling and a second half-coupling, a first end of the first half-coupling is connected to the driving member, a second end of the first half-coupling is provided with a first protruding holding jaw, a first end of the second half-coupling is connected to the lifting body, a second end of the second half-coupling is provided with a second protruding holding jaw, and the first protruding holding jaw is inserted into the second protruding holding jaw; the driving member is detachably mounted to an end surface of the first end of the mounting support.

Alternatively, the mounting plate is provided with a first access port, the limiting member is provided with a second access port, the mounting support is provided with a third access port, the third access port communicates with the mounting cavity, and the opening, the first access port, the second access port and the third access port correspond to each other.

Alternatively, the driving unit further includes a dust guard, and the dust guard covers the third access port.

Alternatively, the fixed column further includes a support base provided between the quick-release member and the base, an end of the support base facing away from the maintenance hole abutting against the quick-release member, and the support base is used for supporting the quick-release member.

In order to solve the above technical problem, another technical solution adopted by the present application is:
a calibration device including a calibration support as described above is provided.

Advantageous effects of the embodiments of the present application are: unlike the prior art, embodiments of the present application provide a calibration support including a base, a column assembly, and a beam assembly. The base is provided with a maintenance hole penetrating the base; the column assembly includes a fixed column, a lifting column, a driving assembly and a quick-release member; a first end of the fixed column is arranged on the base, the fixed column is provided with an accommodation cavity, the accommodation cavity extends from the first end of the fixed column to another end of the fixed column, and one side of the fixed column is provided with an opening, and the opening is communicated with the accommodation cavity; the first end of the lifting column is inserted into the accommodation cavity from the second end of the fixed column, the quick-release member is detachably connected to the fixed column, and the quick-release member corresponds to the opening; the driving assembly is arranged in the accommodation cavity, and the driving assembly corresponds to the maintenance hole; and the quick-release member limits the driving assembly to block the movement of the driving assembly toward the maintenance hole, and the driving assembly is detachably connected to the lifting column; and a beam assembly provided on the lifting column. Compared with the current method for fixing the driving assembly of the calibration support to the base, the embodiment of the present application provides that the driving assembly is fixed to the fixed column by limiting the position through a quick-release member, and when it is necessary to disassemble the driving assembly, after the quick-release member is disassembled through the opening, the driving assembly can be removed from the maintenance hole through the maintenance hole without disassembling the base and the fixed column. Thus, the calibration support according to the embodiments of the present application solves the problem that the operation of the calibration support is difficult and tedious when disassembling and assembling the driving assembly in the past.

### BRIEF DESCRIPTION OF THE DRAWINGS

FIG. 1 is an exploded view of a current calibration support;
FIG. 1a is a partially enlarged view of FIG. 1;
FIG. 2 is a perspective view of a calibration support according to an embodiment of the present application; and
FIG. 3 is a schematic diagram of a base and a bottom cover of a calibration support according to an embodiment of the present application.
FIG. 4 is an exploded view of a column assembly of a calibration support according to an embodiment of the present application.
FIG. 5 is an exploded view of a fixed column of a calibration support according to an embodiment of the present application;
FIG. 6 is an exploded view of a lifting column of a calibration support according to an embodiment of the present application;
FIG. 7 is another exploded view of a lifting column of a calibration support according to an embodiment of the present application;
FIG. 8 is an exploded view of a mounting support and dust cover plate of a calibration support according to an embodiment of the present application;
FIG. 9 is a schematic diagram of another perspective of FIG. 8;
FIG. 10 is a schematic diagram of a driving member of a calibration support according to an embodiment of the present application;
FIG. 11 is an exploded view of a coupling of a calibration support according to an embodiment of the present application;
FIG. 12 is a schematic exploded view of a lifting body of a calibration support according to an embodiment of the present application;
FIG. 12a is a partially enlarged view of FIG. 12;
FIG. 12b is another partially enlarged view of FIG. 12;
FIG. 13 is a schematic partially exploded view of a column assembly of a calibration support according to an embodiment of the present application;
FIG. 14 is a schematic diagram of a quick-release member of a calibration support according to an embodiment of the present application; and
FIG. 15 is a schematic diagram of a hinged base of a calibration support according to an embodiment of the present application.

### DETAILED DESCRIPTION OF THE INVENTION

To facilitate an understanding of the present application, a more particular description of the application will be rendered by reference to specific embodiments thereof which are illustrated in the appended drawings. It should be noted that when an element is referred to as being "fixed" to another element, it can be directly on another element or there may be one or more intervening elements in between. When an element is referred to as being "coupled" to another element, it can be directly connected to another element or there may be one or more intervening elements in between. The terms "vertical", "horizontal", "left", "right", and the like are used herein for descriptive purposes only.

Unless defined otherwise, all technical and scientific terms used in the description have the same meaning as commonly understood by a person skilled in the art to which the present application belongs. The terminology used in the description of the present application herein is for the purpose of describing embodiments only and is not intended to be limiting of the present application. As used herein, the term "and/or" includes any and all combinations of one or more of the associated listed items.

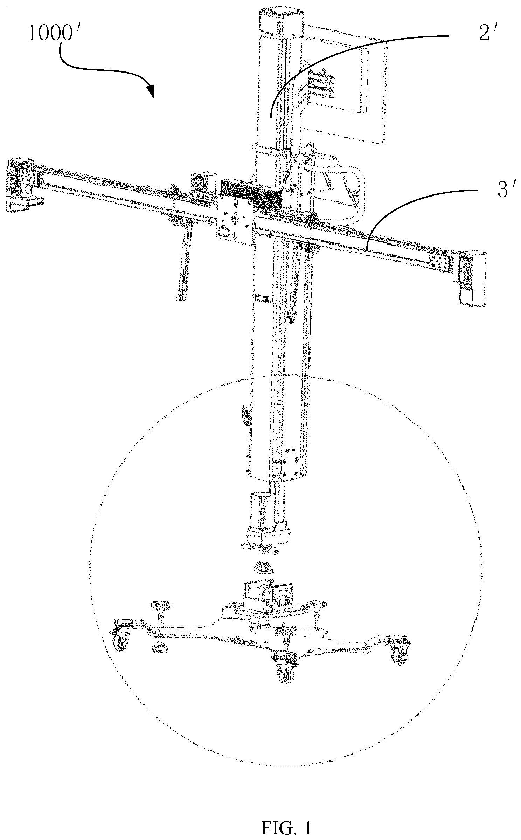

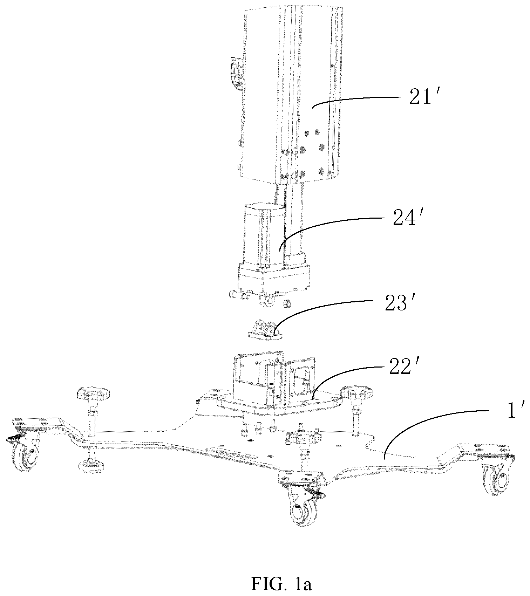

Referring to FIGS. 1 and 1a, a current calibration support 1000' includes a base 1', a column assembly 2' and a beam assembly 3'. The column assembly 2' includes a fixed column 21', a support base 22', a lifting column, a mounting support 23', and a driving assembly 24'. The fixed column 21' is provided with an accommodation cavity extending from a first end of the fixed column 21' to a second end of the fixed column 21', the first end of the fixed column 21' is provided with a first opening communicating with the accommodation cavity, and the second end of the fixed column 21' is provided with a second opening communicating with the accommodation cavity. One end of the support base 22' is bolted to the base 1', so that the support base 22' is fixed to the base 1', and the other end of the support base 22' is bolted to a first end of the fixed column 21'; the mounting support 23' and the driving assembly 24' are both provided in the accommodation cavity; one end of the mounting support 23' is fixed to the base 1', and the other end is detachably connected to a first end of the driving assembly 24'; the first end of the lifting column is inserted into the accommodation cavity from a second end of the fixed column 21'; and the second end of the driving assembly 24' is detachably connected to the lifting column. When it is necessary to disassemble the driving assembly 24' for maintenance or replacement, it is necessary to disassemble the fixed column 21' from the base 1', disassemble the driving member from the mounting support 23' and remove the driving assembly 24' from the accommodation cavity through the first opening.

In practice, the inventors have found that it is tedious and difficult to assemble and disassemble the driving assembly 24' due to the large weight of both the base 1' and the column assembly 2' and the need to align the bolt holes of the fixed column 21' with the threaded holes of the base 1' during assembly and disassembly. In order to solve the above problems, the inventors have improved the calibration support 1000' so that the improved calibration support 1000' is easier and convenient to assemble and disassemble the driving assembly 24'.

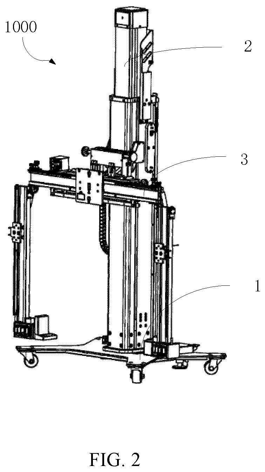

FIG. 2 is a schematic diagram of a calibration support 1000 provided by an embodiment of the present application, and the calibration support 1000 provided by the present application is described in detail below.

Referring to FIG. 2, the calibration support 1000 includes a base 1, a column assembly 2, and a beam assembly 3. The column assembly 2 is provided on the base 1, and a beam assembly 3 is provided on the column assembly 2. The base 1 is used for carrying the components of the calibration support 1000. The column assembly 2 serves to support the beam assembly 3, and the column assembly 2 can adjust the height of the beam assembly 3 from the ground. The beam assembly 3 is used for mounting calibration elements.

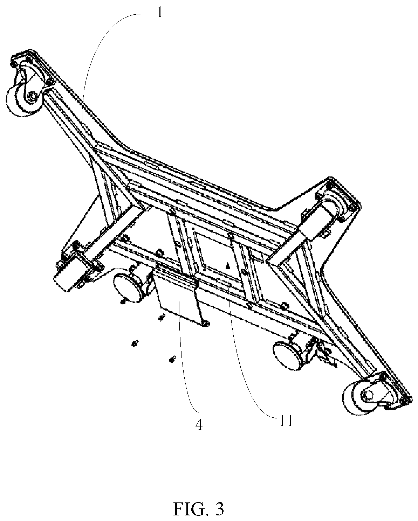

For the above-mentioned base 1, referring to FIG. 3, the base 1 is provided with a maintenance hole 11, and the maintenance hole 11 penetrates the base 1.

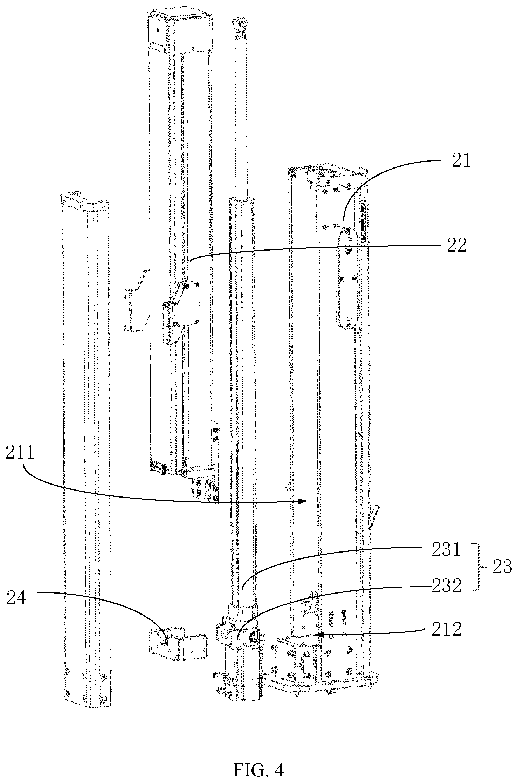

For the above-mentioned column assembly 2, referring to FIG. 4, the column assembly 2 includes a fixed column 21, a lifting column 22, a driving assembly 23 and a quick-release member 24. A first end of the fixed column 21 is provided on the base 1, the fixed column 21 is provided with an accommodation cavity 211, the accommodation cavity 211 extends from the first end of the fixed column 21 to a second end of the fixed column 21, one side of the fixed column 21 is provided with an opening 212, and the opening 212 communicates with the accommodation cavity 211. The first end of the lifting column 22 is inserted into the accommodation cavity 211 from the second end of the fixed column 21. A driving assembly 23 is provided in the accommodation cavity 211, the driving assembly 23 corresponds to the maintenance hole 11**,** the driving assembly 23 is detachably connected to the lifting column 22, and the driving assembly 23 is used for driving the lifting column 22 to move along the accommodation cavity. The quick-release member 24 is detachably connected to the fixed column 21, and the quick-release member 24 corresponds to the opening 212; and the quick-release member 24 limits the driving assembly 23 and blocks the driving assembly 23 from moving towards the maintenance hole 11. After disassembling the driving assembly 23 from the lifting column 22 and disassembling the quick-release member 24 from the fixed column 21 and removing the first quick-release member 24 through the opening 212, the driving assembly 23 can be moved towards the maintenance hole 11 through which the driving assembly 23 can be removed from the accommodation cavity 211, facilitating maintenance and replacement of the components of the driving assembly 23.

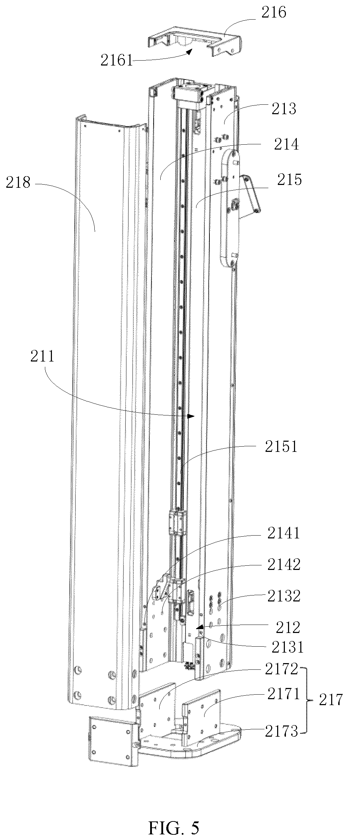

For the above-mentioned fixed column 21, in the present embodiment, referring to FIGS. 4 and 5, the fixed column 21 includes a first enclosure plate 213, a second enclosure plate 214, a third enclosure plate 215, a top cover 216 and a support base 217. Respective ends of the first enclosure plate 213, the second enclosure plate 214 and the third enclosure plate 215 are all fixed to the bottom plate 2173; one side of the third enclosure plate 215 is connected to the first enclosure plate 213; the other side of the third enclosure plate 215 is connected to the second enclosure plate 214; the first enclosure plate 213 and the second enclosure plate 214 are oppositely and spaced apart; the top cover 216 covers the first enclosure plate 213; one end of the second enclosure plate 214 and the third enclosure plate 215 away from the base 1; the first enclosure plate 213, the second enclosure plate 214, the third enclosure plate 215 and the top cover 216 together enclose to form an accommodation cavity 211; and one side of the first enclosure plate 213 and the second enclosure plate 214 away from the third enclosure plate 215 together form an opening 212. The support base 217 includes a first support plate 2171, a second support plate 2172 and a bottom plate 2173, where the first support plate 2171 and the second support plate 2172 are fixed to the bottom plate 2173 at an interval oppositely, and the bottom plate 2173 is provided with a through hole which penetrates the bottom plate 2173 in the thickness direction of the bottom plate 2173. An end face of one end of the first enclosure plate 213 away from the top cover 216, an end face of one end of the second enclosure plate 214 away from the top cover 216 and an end face of one end of the third enclosure plate 215 away from the top cover 216 are all provided with a threaded hole, a bottom plate 2173 is correspondingly provided with a bolt hole, an end of the first support plate 2171 away from the bottom plate 2173 and an end of the second support plate 2172 away from the bottom plate 2173 are inserted between the first enclosure plate 213 and the second enclosure plate 214, and an end face of one end of the first enclosure plate 213 away from the top cover 216; an end surface of one end of the second enclosure plate 214 away from the top cover 216 and an end surface of one end of the third enclosure plate 215 away from the top cover 216 both abut against the bottom plate 2173, and the first enclosure plate 213, the second enclosure plate 214 and the third enclosure plate 215 are bolted to the bottom plate 2173; the bottom plate 2173 and the base 1 are respectively provided with corresponding bolt holes and threaded holes, and the bottom plate 2173 is bolted to the base 1, thereby fixing the first enclosure plate 213, the second enclosure plate 214 and the third enclosure plate 215 to the base 1. Further, in order to connect the fixed column 21 to the base 1 more stably, one side of the first enclosure plate 213 facing the second enclosure plate 214 is provided with a bolt hole, the first support plate 2171 is correspondingly provided with a threaded hole, and the first enclosure plate 213 is bolted to the first support plate 2171 connection; a side of the second enclosure plate 214 facing the first enclosure plate 213 is provided with a bolt hole, the second support plate 2172 is correspondingly provided with a threaded hole, and the second enclosure plate 214 is bolted to the second support plate 2172. The side of the third enclosure plate 215 facing the accommodation cavity 211 is provided with a first sliding rail 2151, where the first sliding rail 2151 extends from the top cover 216 in the direction of the base 1, and the first sliding rail 2151 is used for guiding the lifting column 22. The top cover 216 is provided with a penetrating groove 2161 extending through the top cover 216 in the direction of the top cover 216 towards the base 1 and through the top cover 216 in the direction of the third enclosure plate 215 towards an opening 212.

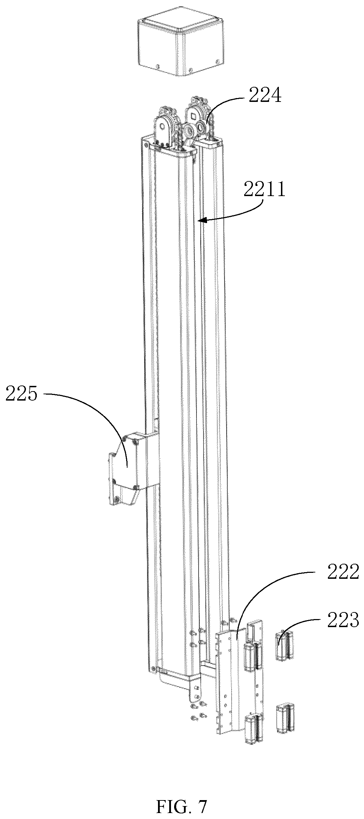

For the above-mentioned lifting column 22, in the present embodiment, referring to FIGS. 4, 6 and 7, the lifting column 22 includes a cylinder 221, a first connection base 222 and a slider. A first end of the cylinder 221 is provided opposite to a second end of the cylinder 221, the first end of the cylinder 221 is inserted into the accommodation cavity 211 from a penetrating groove 2161 of the top cover 216 of the fixed column 21, and one side of the cylinder 221 is provided with a through groove 2211, where the through groove 2211 penetrates an end surface of the first end of the cylinder 221 and an end surface of the second end of the cylinder 221. A first connection base 222 is provided on a side of the cylinder 221, and the first connection base 222 is close to a first end of the cylinder 221; a sliding block is mounted on the first connection base 222; a first sliding block 223 cooperates with a first sliding rail 2151 to slidably connect the lifting column 22 with the fixed column 21; the lifting column 22 can move along the first sliding rail 2151 in the accommodation cavity 211; and one end of the lifting column 22 away from the base 1 can protrude out of the accommodation cavity 211 via the penetrating groove 2161.

For the above-mentioned driving assembly 23, referring to FIG. 4, the driving assembly 23 includes a driving unit 231 and a limiting member 232. The limiting member 232 is connected to the driving unit 231, the driving unit 231 is detachably connected to the lifting column 22, the driving unit 231 is used for driving the lifting column 22 to move along the accommodation cavity 211, and the limiting member 232 is used for cooperating with the quick-release member so as to block the driving unit 231 from moving towards the maintenance hole 11.

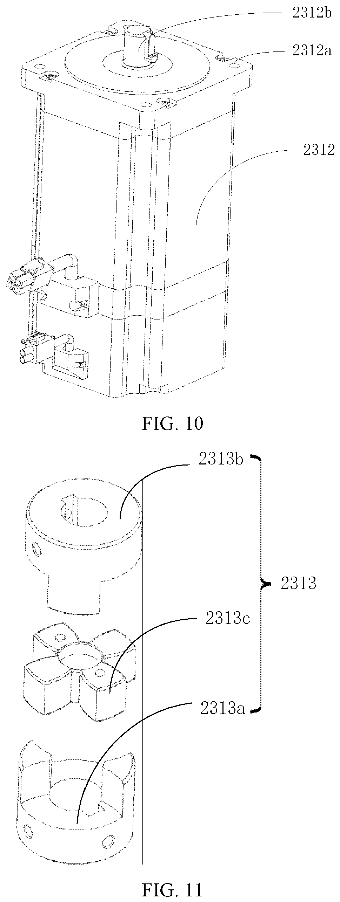

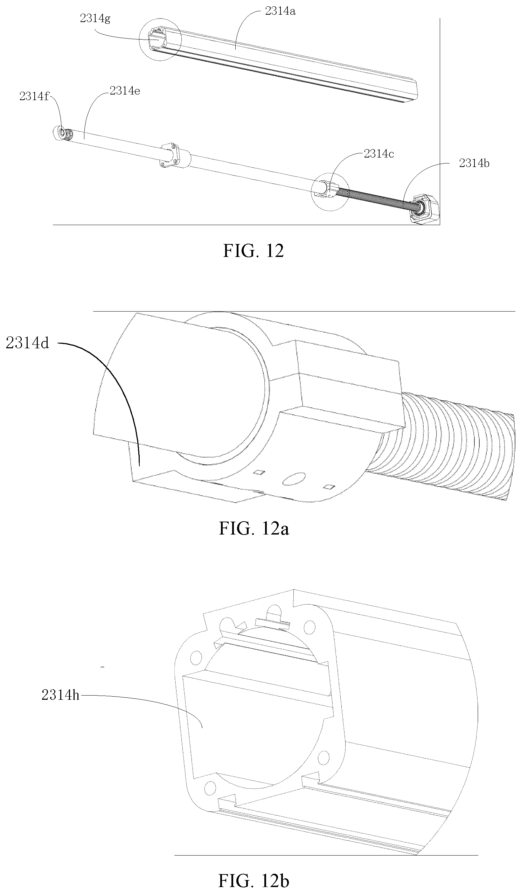

For the above-mentioned driving unit 231, in the present embodiment, referring to FIGS. 4, 8-12, 12a and 12b, the driving unit 231 includes a mounting support 2311, a driving member 2312, a coupling 2313, a lifting body 2314 and a first bolt. The mounting support 2311 is provided with a mounting cavity 2311a, a first end of the mounting support 2311 faces the maintenance hole 11**,** a first end of the mounting support 2311 is provided with a first through hole 2311b communicating with the mounting cavity 2311a, a second end of the mounting support 2311 faces away from the maintenance hole 11, and a second end of the mounting support 2311 is provided with a second through hole 2311c communicating with the mounting cavity 2311a. The coupling 2313 is located in the mounting cavity 2311a, the coupling 2313 is a plum coupling 2313, and the coupling 2313 includes a first half coupling 2313a, a second half coupling 2313b and a plum elastomer 2313c. The driving member 2312 is a motor; one end of the driving member 2312 facing the mounting support 2311 is provided with a first bolt hole 2312a; an end face of the first end of the mounting support 2311 is provided with a first threaded hole 2311d; a first bolt penetrates the first bolt hole 2312a and is screwed to the first threaded hole 2311d so as to detachably fix the driving member 2312 to the mounting support 2311; and an output shaft 2312b of the driving member 2312 is inserted into the mounting cavity 2311a via the first through hole 2311b and is connected to the first end of the first half coupling 2313a. The lifting body 2314 includes a sliding support 2314a, a lead screw 2314b, a lead screw nut 2314c, and a push rod 2314e. A first end of the sliding support 2314a faces the base 1; a second end of the sliding support 2314a is inserted into the through groove 2211; the sliding support 2314a is provided with a sliding cavity 2314g; the sliding cavity 2314g extends from the first end of the sliding support 2314a to the second end of the sliding support 2314a; an inner wall of the sliding support 2314a is provided with a sliding slot 2314h extending along the first end of the sliding support 2314a to the second end of the sliding support 2314a; the first end of the sliding support 2314a is connected to the second end of the mounting support 2311; the lead screw nut 2314c is located in the sliding cavity 2314g, the lead screw nut 2314c is provided with a sliding protrusion 2314d, and the sliding protrusion 2314d is inserted into the sliding slot 2314h, so that the lead screw nut 2314c can move along the sliding slot 2314h in the sliding cavity 2314g. One end of the lead screw 2314b is fixed to the second end of the sliding support 2314a, one end of the lead screw 2314b is inserted into the mounting cavity 2311a via the second through hole 2311c and then connected to the first end of the second half coupling 2313b, and the lead screw nut 2314c is screwed to the lead screw 2314b. A rod body portion of a push rod 2314e is a hollow cylinder 221, the push rod 2314e is sheathed on the lead screw 2314b, a first end of the push rod 2314e is fixed on the lead screw nut 2314c, and a second end of the push rod 2314e is detachably connected to the lifting column 22. When the lead screw 2314b is rotated, the lead screw nut 2314c can move along the sliding slot 2314h in the sliding cavity 2314g, thereby driving the push rod 2314e to move in a direction parallel to an axis of the lead screw 2314b, thereby pushing the lifting column 22 to move along the sliding slot 2314h in the accommodation cavity 211. The second end of the first half coupling 2313a is provided with a first protruding holding jaw, the second end of the second half coupling 2313b is provided with a second protruding holding jaw, the first protruding holding jaw is inserted into the second protruding holding jaw, the plum elastomer 2313c is provided at a gap between the first protruding holding jaw and the second protruding holding jaw; when the motor drives the first half coupling 2313a to rotate, the first protruding holding jaw rotates to press the plum elastomer 2313c which presses the second protruding holding jaw to transmit power to the second protruding holding jaw to drive the second half coupling 2313b to rotate, and then drive the lead screw 2314b to rotate. It will be appreciated that by changing the direction of rotation of the motor, the direction of rotation of the lead screw 2314b and thus the direction of advancement of the push rod 2314e can be changed. Since the driving member 2312 is detachably mounted on the first end of the mounting support 2311, and the first half coupling 2313a and the second half coupling 2313b are inserted via the first protruding holding jaw and the second protruding holding jaw, after the driving member 2312 is detached from the mounting support 2311 via the maintenance hole 11, the driving member 2312 can be separately taken out from the maintenance hole 11; since the coupling 2313 is a plum coupling 2313, a damping effect can be achieved by elastic deformation of the plum elastomer 2313c.

It will be appreciated that in some other embodiments, the driving member 2312 is not limited to being a motor, the driving member 2312 may be a pneumatic or hydraulic motor or the like, and the driving member 2312 may suffice as a device that can output torque.

It will also be appreciated that in some other embodiments, the coupling 2313 is not limited to a plum coupling 2313, and in order to achieve that the driving member 2312 can be separately removed from the maintenance hole 11, a coupling 2313 that can be directly connected and separated by plugging and unplugging in the axial direction is selected, for example, a slider coupling 2313, etc. Conversely, other types of couplings 2313, such as a diaphragm coupling 2313, may be selected.

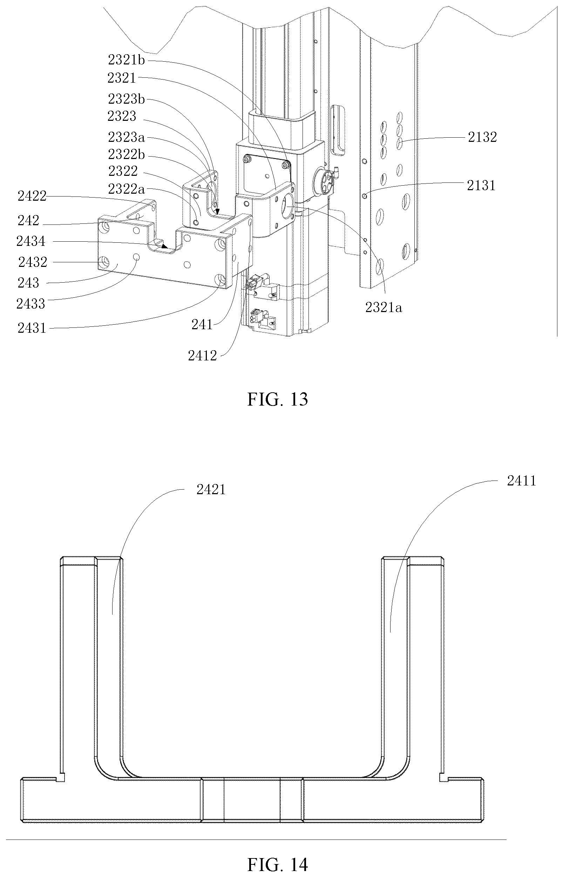

For the above-mentioned limiting member 232, referring to FIGS. 4 and 13, the limiting member 232 is connected to a mounting support 2311, and the limiting member 232 is used for cooperating with a quick-release member 24 to limit the movement of the driving unit 231 so as to block the driving unit 231 from moving towards the maintenance hole 11. In the present embodiment, the limiting member 232 includes a first limiting plate 2321, a connection plate 2322 and a second limiting plate 2323, where the first limiting plate 2321 and the second limiting plate 2323 are fixed to the connection plate 2322 at an interval oppositely, and the mounting support 2311 is located between the first limiting plate 2321 and the second limiting plate 2323.

For the above-mentioned quick-release member 24, in the present embodiment, referring to FIGS. 4, 13 and 14, the quick-release member 24 includes a first side plate 241, a second side plate and a mounting plate 243, where the first side plate 241 and the second side plate are fixed to the mounting plate 243 at an interval oppositely, a surface of the first side plate 241 facing the second side plate is provided with a first limiting step 2411, and a surface of the second side plate facing the first side plate 241 is provided with a second limiting step. The mounting plate 243 is provided with a second bolt hole 2431 and a third bolt hole 2432, a side of the first enclosure plate 213 facing away from the third enclosure plate 215 is provided with a second threaded hole 2131, a side of the second enclosure plate 214 facing away from the third enclosure plate 215 is provided with a third threaded hole 2141, and the column assembly 2 further includes a second bolt and a third bolt, where the second bolt penetrates the second bolt hole 2431 and is screwed to the second threaded hole 2131, and the third bolt penetrates the third bolt hole 2432 and is screwed to the third threaded hole 2141, so as to fix the quick-release member 24 to the fixed column 21; at the same time, an end of the first support plate 2171 away from the bottom plate 2173 abuts against the first side plate 241, an end of the second support plate 2172 away from the bottom plate 2173 abuts against the second side plate, and the support base 217 plays a supporting role for the quick-release member 24. The limiting member 232 is inserted between the first side plate 241 and the second side plate, one end of the first limiting plate 2321 facing the maintenance hole 11 abuts against the first limiting step 2411, one end of the second limiting plate 2323 facing the maintenance hole 11 abuts against the second limiting step, and the first limiting step 2411 and the second limiting step together support the limiting member 232, thereby blocking the movement of the driving unit 231 to the maintenance hole 11.

It will be appreciated that the quick-release member 24 is not limited to being bolted to the fixed column 21, and in some other embodiments, the quick-release member 24 may be snap-fit or in magnetic attraction to the fixed column 21.

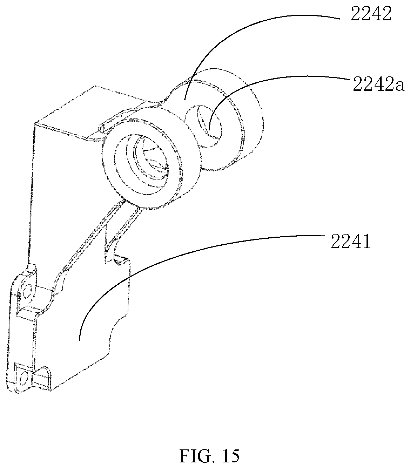

In the present embodiment, referring to FIGS. 5, 7-9, 12, 13 and 15, in order to release a bending moment acting on the driving unit 231 due to the tolerance, the limiting member 232 is designed to be hinged with the mounting support 2311, and the second end of the push rod 2314e is designed to be detachably hinged with the lifting column 22. Specifically, the first limiting plate 2321 is provided with a first mounting hole 2321a, the second limiting plate 2323 is provided with a second mounting hole 2323a, and the first mounting hole 2321a corresponds to the second mounting hole 2323a; a first mounting shaft 2311e and a second mounting shaft 2311f are further respectively provided on two opposite side surfaces of the mounting support 2311; the mounting support 2311 is located between the first limiting plate 2321 and the second limiting plate 2323; the first mounting shaft 2311e penetrates the first mounting hole 2321a; the second mounting shaft 2311f penetrates the second mounting hole 2323a; and in this way, the limiting member 232 is hinged to the mounting support 2311. The second end of the push rod 2314e is provided with a third mounting hole 2314f, and the lifting body 2314 further includes a hinge bolt and a nut; the lifting column 22 further includes a hinged base 224, the hinged base 224 is used for connecting with the lifting assembly, and the hinged base 224 includes a mounting seat 2241 and a support arm 2242, where the mounting seat 2241 is provided on an end face of the second end of the cylinder 221, the number of the support arms 2242 is two, the two support arms 2242 are fixed to the mounting seat 2241 at an interval oppositely, one end of the two support arms 2242 away from the mounting seat 2241 faces a notch of the through groove 2211 at the second end of the cylinder 221, and one end of the respective two support arms 2242 away from the mounting seat 2241 is respectively provided with a corresponding fourth mounting hole 2242a. The second end of the push rod 2314e is inserted between the two support arms 2242, the two fourth mounting holes 2242a are aligned with the third mounting holes 2314f, and the hinge bolt penetrates the two fourth mounting holes 2242a and the third mounting holes 2314f and is screwed to the nut, so that the end of the driving unit 231 away from the maintenance hole 11 is hinged to the lifting column 22. At the same time, in order to fix the limiting member 232, the first enclosure plate 213 is provided with a first fixing hole 2132, the first side plate 241 is provided with a second fixing hole, the first limiting plate 2321 is provided with a fourth threaded hole 2321b, the first fixing hole 2132, the second fixing hole and the fourth threaded hole 2321b correspond to each other, the column assembly 2 further includes a first fixing bolt, and the first fixing bolt penetrates the first fixing hole 2132 and the second fixing hole in sequence and is then screwed to the fourth threaded hole 2321b; the second enclosure plate 214 is provided with a third fixing hole 2142, the second side plate is provided with a fourth fixing hole 2422, the second limiting plate 2323 is provided with a fifth threaded hole 2323b, the column assembly 2 further includes a second fixing bolt, the third fixing hole 2142, the fourth fixing hole 2422 and the fifth threaded hole 2323b correspond to each other, and the second fixing bolt penetrates the third fixing hole 2142 and the fourth fixing hole 2422 successively and is then screwed to the fifth threaded hole 2323b; the mounting plate 243 is provided with a fifth fixing hole 2433, the connection plate 2322 is provided with a sixth threaded hole 2322a corresponding to the fifth fixing hole 2433, and the column assembly 2 further includes a third fixing bolt which penetrates the fifth fixing hole 2433 and is screwed to the sixth threaded hole 2322a. Compared with the method of fixedly connecting the driving unit 231 with the limiting member 232 and the lifting column 22, the two-end hinged connection method can release the bending moment acting on the driving unit 231 due to tolerance, and can avoid the forced bending deformation of the push rod 2314e and the lead screw 2314b.

It will be appreciated that, in some other embodiments, the limiting member 232 is not limited to being fixed in the above-mentioned manner, and only the first fixing hole 2132, the second fixing hole and the fourth threaded hole 2321b, or the third fixing hole 2142, the fourth fixing hole 2422 and the fifth threaded hole 2323b, or the fifth fixing hole and the sixth threaded hole 2322a may be provided; the limiting member 232 is not limited to being fixed to the fixed column 21 or the quick-release member 24 by a bolt, but may be connected by providing a plug hole and a pin, or the quick-release member 24 is fixed to the limiting member 232 by snap-fit along the direction of the opening 212 toward the accommodation cavity 211, or by magnetic attraction.

In the present embodiment, referring to FIG. 3, the calibration support 1000 further includes a bottom cover 4, where the bottom cover 4 covers the maintenance opening so as to close the accommodation cavity 211, and the bottom cover 4 is bolted to the base 1.

In conjunction with the above, in the present embodiment, when it is necessary to remove the driving assembly 23 in order to repair the components of the driving unit 231, it is possible to operate as follows:
firstly, the hinge bolt and nut are disassembled to separate the second end of the push rod 2314e from the lifting column 22;
secondly, the first fixing bolt, the second fixing bolt and the third fixing bolt are removed to separate the limiting member 232 from the fixed column 21;
thirdly, the second bolt and the third bolt are removed, and then the quick-release member 24 is pulled out through the opening 212, and at this time, the driving assembly 23 is separated from the fixed column 21; and
Finally, the bottom cover 4 is removed and the driving assembly 23 is removed from the accommodation cavity 211 through the maintenance hole 11.

When the driving assembly 23 is mounted, the driving assembly 23 is inserted into the accommodation cavity 211 from the maintenance hole 11, the quick-release member 24 is inserted into the accommodation cavity 211 through the opening 212 to clamp the driving assembly 23, and then when the hinge bolt, the first fixing bolt, the second fixing bolt and the third fixing bolt are mounted next without interference of aligning the bolts.

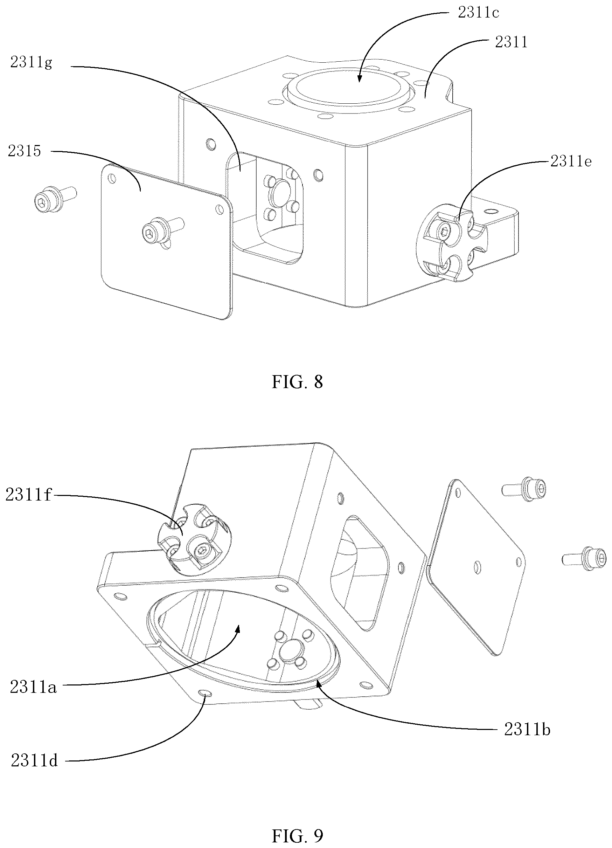

Further, in order to facilitate the adjustment and maintenance of the coupling 2313, in some embodiments, referring to FIGS. 8 and 13, the mounting plate 243 is provided with a first access port 2434, the connection plate 2322 of the limiting member 232 is provided with a second access port 2322b, the mounting support 2311 is provided with a third access port 2311g, the third access port 2311g communicates with the mounting cavity 2311a, the opening 212, the first access port 2434, the second access port 2322b and the third access port 2311g correspond to each other, and a tool is used to extend the first access port 2434, the second access port 2322b and the third access port 2311g into the mounting cavity 2311a so as to adjust the tightness of the positioning bolt of the coupling 2313.

Furthermore, in some embodiments, the driving unit 231 further includes a dust guard 2315, where the dust guard 2315 covers the third access port 2311g, and the dust guard 2315 is fixed to the mounting support 2311 via a bolt, and the dust guard 2315 is used for placing a large amount of external dust into the mounting cavity 2311a during use.

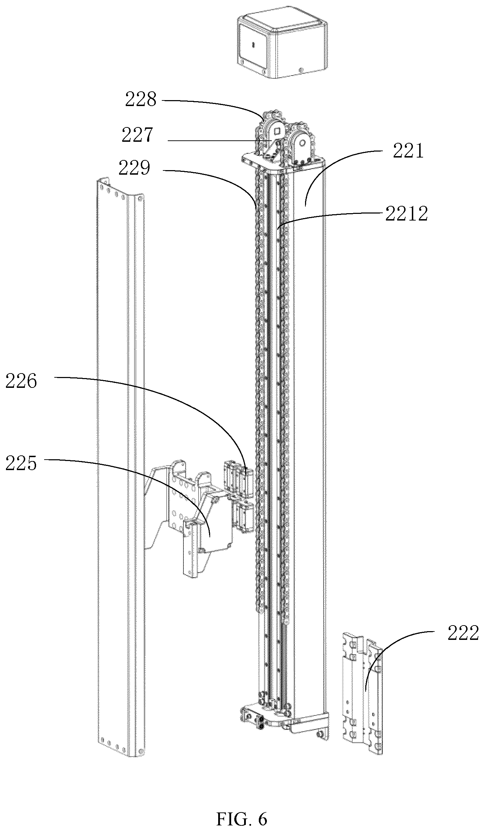

For the above-mentioned beam assembly 3 described above, referring to FIGS. 2 and 6, the beam assembly 3 is used for mounting calibration elements, and the lifting column 22 further includes a second connection base 225, a second slider 226, a sprocket 228 support 227, a sprocket 228 and a chain 229. The second slider 226 is coupled to a second connection base 225 on which the beam assembly 3 is mounted. A second sliding rail 2212 is provided on a side of the cylinder 221 facing away from the through groove 2211, the second sliding rail 2212 extends along a first end of the cylinder 221 to a second end of the cylinder 221, a second sliding block 226 is provided on the second sliding rail 2212, and the second sliding block 226 cooperates with the second sliding rail 2212 so that the beam assembly 3 can slide along the second sliding rail 2212. The sprocket 228 support 227 is provided on an end surface of the second end of the cylinder 221, the sprocket 228 is rotatably connected to the sprocket 228 support 227, one end of a chain 229 is fixed to the second connection base 225, the chain 229 is provided around the sprocket 228, and the other end of the chain 229 is fixed to the first end of the cylinder 221. When the driving unit 231 drives the lifting column 22 to move along the first sliding rail 2151, the second action of the chain 229, the second sliding block 226 and the second sliding rail 2212, the second connection base 225 can move the beam assembly 3 in the same direction as the lifting column 22.

Embodiments of the present application also provide a calibration device, including the above-mentioned calibration support 1000, and reference can be made to the above-mentioned embodiments for the structure and function of the calibration support 1000, which will not be described in detail herein.

The present embodiment provides a calibration support 1000 including a base 1, a column assembly 2 and a beam assembly 3. The base 1 is provided with a maintenance hole 11, and the maintenance hole 11 penetrates the base 1; the column assembly 2 includes a fixed column 21, a lifting column 22, a driving assembly 23 and a quick-release member 24, where a first end of the fixed column 21 is provided on the base 1, the fixed column 21 is provided with an accommodation cavity 211, the accommodation cavity 211 extends from the first end of the fixed column 21 to the other end of the fixed column 21, one side of the fixed column 21 is provided with an opening 212, the opening 212 communicates with the accommodation cavity 211, the first end of the lifting column 22 is inserted into the accommodation cavity 211 from the second end of the fixed column 21, and the quick-release member 24 is detachably connected to the fixed column 21; and the quick-release member 24 corresponds to the opening 212, the driving assembly 23 is provided in the accommodation cavity 211, the driving assembly 23 corresponds to the maintenance hole 11, the quick-release member 24 limits the driving assembly 23 and blocks the driving assembly 23 from moving to the maintenance hole 11, the driving assembly 23 is detachably connected to the lifting column 22, and the driving assembly 23 is used for driving the lifting column 22 to move along the accommodation cavity, and the beam assembly 3 is provided to the lifting column 22. Compared with the current method for fixing the driving assembly 23 of the calibration support 1000 to the base 1, the embodiment of the present application provides that the driving assembly 23 is fixed to the fixed column 21 by limiting the quick-release member 24, and when it is necessary to disassemble the driving assembly 23, after the quick-release member 24 is disassembled through the opening 212, the driving assembly 23 can be removed from the maintenance hole 11 through the maintenance hole 11 without disassembling the base 1 and the fixed column 21. Thus, the calibration support 1000 according to the embodiments of the present application solves a conventional problem of difficult and tedious operation of the calibration support 1000 when disassembling and assembling the driving assembly 23.

It should be noted that the preferred embodiments of the present application are shown in the description and the drawings, but the present application may be embodied in many different forms and is not limited to the embodiments described in the description, which are not intended as additional limitations to the present disclosure, which is provided for the purpose of providing a more thorough understanding of the present disclosure. Moreover, the above technical features are combined with each other to form various embodiments which are not listed above, and all of them are regarded as the scope of the present application described in the specification; further, modifications and variations will occur to a person skilled in the art in light of the foregoing description, and it is intended to cover all such modifications and variations as fall within the scope of the appended claims.

## Claims

1. A calibration support, **characterized by** comprising:
a base provided with a maintenance hole, wherein the maintenance hole penetrates the base;
a column assembly comprising a fixed column, a lifting column, a driving assembly and a quick-release member; wherein a first end of the fixed column is arranged on the base, the fixed column is provided with an accommodation cavity, the accommodation cavity extends from the first end of the fixed column to a second end of the fixed column, and one side of the fixed column is provided with an opening, and the opening is communicated with the accommodation cavity; the first end of the lifting column is inserted into the accommodation cavity from the second end of the fixed column, the quick-release member is detachably connected to the fixed column, and the quick-release member corresponds to the opening; the driving assembly is arranged in the accommodation cavity, and the driving assembly corresponds to the maintenance hole; and the quick-release member limits the driving assembly to block the movement of the driving assembly toward the maintenance hole, and the driving assembly is detachably connected to the lifting column; and
a beam assembly provided on the lifting column.

2. The calibration support according to claim 1, **characterized in that**
the driving assembly comprises a driving unit and a limiting member, the limiting member is connected to the driving unit, and the driving unit is detachably connected to the lifting column;
the quick-release member comprises a mounting plate, a first side plate and a second side plate, wherein the first side plate and the second side plate are fixed to the mounting plate in a relatively spaced manner, the first side plate and the second side plate are inserted into the accommodation cavity from the opening, a surface of the first side plate facing the second side plate is provided with a first limiting step, a surface of the second side plate facing the first side plate is provided with a second limiting step, the driving unit partially passes between the first side plate and the second side plate, and the first limiting step and the second limiting step abut against the limiting member so as to block the driving unit from moving towards the maintenance hole, and the mounting plate is detachably fixed to the fixed column.

3. The calibration support according to claim 2, **characterized in that** an end of the driving unit near the maintenance hole is hinged to the limiting member, and an end of the driving unit away from the maintenance hole is hinged to the lifting column;
the limiting member is detachably fixed to the quick-release member, and/or the limiting member is detachably fixed to the fixed column.

4. The calibration support according to claim 3, **characterized in that**
the limiting member comprises a first limiting plate, a connection plate and a second limiting plate, wherein the first limiting plate and the second limiting plate are fixed to the connection plate at an interval oppositely, the first limiting plate is provided with a first mounting hole, the second limiting plate is provided with a second mounting hole, and two opposite side surfaces of the driving unit are respectively provided with a first mounting shaft and a second mounting shaft;
the driving unit portion passes between the first limiting plate and the second limiting plate, the first mounting shaft penetrates the first mounting hole, the second mounting shaft penetrates the second mounting hole, one end of the first limiting plate facing the maintenance hole abuts against the first limiting step, and one end of the second limiting plate facing the maintenance hole abuts against the second limiting step.

5. The calibration support according to claim 2, **characterized in that**
the driving unit comprises a mounting support, a coupling, a driving member and a lifting body, wherein the mounting support is provided with a mounting cavity, a first end of the mounting support faces the maintenance hole, the first end of the mounting support is provided with a first through hole communicating with the mounting cavity, a second end of the mounting support faces away from the maintenance hole, the second end of the mounting support is provided with a second through hole communicating with the mounting cavity, the lifting body is mounted on the first end of the mounting support, the coupling is located in the mounting cavity, and the driving member is mounted on the second end of the mounting support; one end of the coupling is connected to the lifting body via the first through hole, and the other end of the coupling is connected to the driving member via the second through hole;
the mounting support is connected to the limiting member.

6. The calibration support according to claim 5, **characterized in that** the coupling comprises a first half-coupling and a second half-coupling, a first end of the first half-coupling is connected to the driving member, a second end of the first half-coupling is provided with a first protruding holding jaw, a first end of the second half-coupling is connected to the lifting body, a second end of the second half-coupling is provided with a second protruding holding jaw, and the first protruding holding jaw is inserted into the second protruding holding jaw;
the driving member is detachably mounted to an end surface of the first end of the mounting support.

7. The calibration support according to claim 5, **characterized in that**
the mounting plate is provided with a first access port, the limiting member is provided with a second access port, the mounting support is provided with a third access port, the third access port communicates with the mounting cavity, and the opening, the first access port, the second access port and the third access port correspond to each other.

8. The calibration support according to claim 7, **characterized in that** the driving unit further comprises a dust guard, and the dust guard covers the third access port.

9. The calibration support according to claim 1, **characterized in that** the fixed column further comprises a support base provided between the quick-release member and the base, an end of the support base facing away from the maintenance hole abutting against the quick-release member, and the support base is used for supporting the quick-release member.

10. A calibration device, **characterized by** comprising the calibration support according to any one of claims 1-9.
